(19) Europäisches Patentamt
European Patent Office
Office européen des brevets

(11) **EP 4 618 290 A2**

(12) **EUROPEAN PATENT APPLICATION**

(43) Date of publication:
**17.09.2025 Bulletin 2025/38**

(21) Application number: **25162612.3**

(22) Date of filing: **10.03.2025**

(51) International Patent Classification (IPC):
*H01M 50/42* (2021.01)     *H01M 50/443* (2021.01)
*H01M 50/446* (2021.01)     *H01M 50/451* (2021.01)
*H01M 50/457* (2021.01)     *H01M 50/417* (2021.01)
*H01M 50/46* (2021.01)     *H01M 50/489* (2021.01)
*H01M 10/0525* (2010.01)

(52) Cooperative Patent Classification (CPC):
**H01M 50/417; H01M 10/0525; H01M 50/42;
H01M 50/443; H01M 50/446; H01M 50/451;
H01M 50/457; H01M 50/461; H01M 50/489**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.03.2024 KR 20240033696**

(71) Applicants:
• **SK Innovation Co., Ltd.
Seoul 03188 (KR)**
• **SK ie technology Co., Ltd.
Jongno-gu
Seoul
03188 (KR)**

(72) Inventors:
• **KIM, Yun Bong
34124 Daejeon (KR)**
• **OH, Eun Ji
34124 Daejeon (KR)**
• **KIM, Dong Jae
34124 Daejeon (KR)**
• **JUNG, Hee Joon
34124 Daejeon (KR)**
• **CHO, Kyu Young
34124 Daejeon (KR)**

(74) Representative: **Prüfer & Partner mbB
Patentanwälte · Rechtsanwälte
Sohnckestraße 12
81479 München (DE)**

(54) **COMPOSITE SEPARATOR AND SECONDARY BATTERY USING THE SAME**

(57)     The present disclosure relates to a composite separator and a secondary battery including the same.

More specifically, the present disclosure relates to a composite separator including a porous substrate, a ceramic coated separator including a ceramic layer formed on at least one surface of the porous substrate, and an electrode adhesive layer formed on the outermost layer of at least one surface of the ceramic coated separator, wherein the electrode adhesive layer includes two or more types of organic particles having different average particle diameters D50 and different glass transition temperatures.

FIG. 1

**EP 4 618 290 A2**

**Description**

**TECHNICAL FIELD**

The following disclosure relates to a composite separator, a secondary battery including the same, and an usage thereof in a green technology field.

**BACKGROUND**

A separator manufactured using a porous substrate; or a high heat-resistant separator including a porous substrate and a porous ceramic layer (or an inorganic particle layer) formed on one surface or both surfaces of the porous substrate according to the related art has an insufficient adhesion force to an electrode, and therefore, the separator and the electrode are often separated during a cell assembly process, resulting in distortion or deformation of an electrode assembly. In particular, in a case where the separator including the porous ceramic layer has an insufficient adhesion force to the electrode, a misalignment problem occurs between the electrode and the separator within a jelly roll during cell stacking.

When the stack cell battery with misalignment as described above is operated, a short circuit occurs between electrodes due to locally low resistance caused by misalignment or physical damage caused by continuous use, which causes safety problems such as a fire.

Moreover, recently, a capacity and size of the secondary battery have been increased for application in electric vehicles and the other large system using the secondary battery. In a separator in which a porous ceramic layer (inorganic particle layer) is formed on one surface or both surfaces of a porous substrate (ceramic coated separator (CCS)) of the related art, solving the above problems is even more important for use in batteries for vehicles that require high capacity and high heat resistance.

As a method for improving the adhesion force between the separator and the electrode, there is a method of providing a separator including an adhesive layer formed on an upper portion thereof by applying a solution formed of an adhesive organic substance onto a surface of the separator and drying the solution. However, the adhesive organic substance results in deterioration of permeability and makes it difficult to thin the film, and the adhesion force to the electrode is still poor.

Meanwhile, when the separator containing the adhesive layer is wound, a blocking phenomenon in which the adhesive organic substance is transferred to the opposite surface and detached frequently occurs. Accordingly, there are still various problems that need to be solved, to prevent deterioration of permeability, to maintain the separator thin and to improve the adhesion force, while simultaneously to suppress a decrease in ionic conductivity of the separator and/or a thickness deviation that occurs during alignment of the electrode assembly, which impairs the performance of the battery.

[Related Art Document]

[Patent Document]

(Patent Document 1) Japanese Patent No. 4,414,165 (Publication date: March 3, 2005)

**SUMMARY**

An embodiment of the present disclosure is directed to providing a composite separator including an adhesive layer formed on one surface or both surfaces of a porous separator and containing a particulate organic binder having specific physical properties, thereby providing a composite separator having an excellent adhesion force to an electrode, while at the same time, preventing a blocking phenomenon when the separator is wound. The porous separator may be a porous separator formed of only a porous substrate or a porous separator including a porous substrate and a porous ceramic layer formed on one surface or both surfaces of the porous substrate.

Another embodiment of the present disclosure is directed to providing a composite separator that, when wound and then unwound and used as a separator, may maintain an initial adhesive force without a decrease in adhesive force, does not cause blocking, and has excellent heat resistance.

Still another embodiment of the present disclosure is directed to providing a separator having uniform lithium ion conductivity over the entire area of the separator.

Still another embodiment of the present disclosure is directed to providing a composite separator having excellent anti-blocking properties, which does not cause blocking between adhesive layers, between an adhesive layer and a ceramic layer, or between an adhesive layer and a porous substrate, of a wound roll, even when stored at a high temperature of 50 to 70°C as well as at room temperature of about 25°C during transport and storage of a wound separator.

Still another embodiment of the present disclosure is directed to providing a composite separator capable of resolving the problems in the related art in a case where blocking does not occur when adhesive layers are brought into contact with each other, pressurized at a temperature of 50°C and a pressure of 1.7 MPa for 2 hours, and then peeled at a speed of 300 mm/min and an angle of 180°.

Still another embodiment of the present disclosure is directed to providing a separator having excellent cell capacity retention, for example, a capacity retention rate of 85% or more or 90% or more after 300 cycles compared to an initial capacity, of a lithium ion secondary battery using a separator according to an embodiment of the present disclosure.

The composite separator of the present disclosure and the secondary battery including the same may be widely applied in an electric vehicle, a battery charging station, and other green technology fields such as solar power generation and wind power generation using batteries. In addition, the composite separator of the present disclosure and the secondary battery including the same may be used in an eco-friendly electric vehicle, a hybrid vehicle, and the other vehicle using the secondary battery to prevent climate change by suppressing air pollution and greenhouse gas emissions.

In one general aspect, a composite separator for a secondary battery includes an adhesive layer formed on the outermost layer of at least one surface of a porous separator,

> wherein the adhesive layer includes first organic particles and second organic particles having different average particle diameters D50 and different glass transition temperatures,
> the first organic particles have a lower glass transition temperature and a smaller average particle diameter than the second organic particles, and
> the first organic particles and the second organic particles satisfy the following Relational Expression 1:

$$[\text{Relational Expression 1}]$$

$$3 \leq T_2/T_1 \times R_2/R_1 \leq 8.5$$

> wherein $T_1$ is the glass transition temperature (°C) of the first organic particles, $T_2$ is the glass transition temperature (°C) of the second organic particles, $R_1$ is the average particle diameter D50 ($\mu$m) of the first organic particles, and $R_2$ is the average particle diameter D50 ($\mu$m) of the second organic particles.

In an embodiment, the first organic particles may have a glass transition temperature of 90°C or lower, and the second organic particles may have a glass transition temperature of 95°C or higher, wherein the first and the second organic particles have different glass transition temperature.

In an embodiment, the first organic particles may have an average particle diameter of 100 to 1,000 nm, and the second organic particles may have an average particle diameter of 500 to 2,000 nm, wherein the first and the second organic particles have different average particle diameter.

In an embodiment, the first organic particles may have a glass transition temperature of 90°C or lower and an average particle diameter of 100 to 1,000 nm, and the second organic particles may have a glass transition temperature of 95°C or higher and an average particle diameter of 500 to 2,000 nm, but the present disclosure is not limited thereto.

In an embodiment, the first organic particles and the second organic particles may have a glass transition temperature difference of 5°C or higher, but are not limited thereto.

In an embodiment, the average particle diameter of the second organic particles may be twice or more the average particle diameter of the first organic particles, but is not limited thereto.

In an embodiment, a content ratio of the first organic particles:the second organic particles may be a weight ratio of 50 to 99:50 to 1, but is not limited thereto.

In an embodiment, the first organic particles and the second organic particles may be acrylic-based organic particles.

In an embodiment, the porous separator may include a porous substrate; or a porous substrate and a porous ceramic layer being formed on one surface or both surfaces of a porous substrate and including inorganic particles.

In an embodiment, the inorganic particles of the porous ceramic layer may have an average particle diameter D50 of 50 nm to 2 $\mu$m, but are not limited thereto.

In an embodiment, the inorganic particles of the porous ceramic layer may include first inorganic particles having an average particle diameter D50 of 50 to 500 nm and second inorganic particles having an average particle diameter D50 of 500 to 2,000 nm, but are not limited thereto.

In an embodiment, the porous ceramic layer may have pores formed between the inorganic particles connected by a binder.

In an embodiment, the porous substrate may be a polyolefin-based porous film.

In an embodiment, the composite separator may have one or more properties in the followings:

i) a thermal shrinkage is 3% or less in both a machine direction and a transverse direction when measured after allowing to stand at 150°C for 1 hour,

ii) the number of adhering of the electrodes is 6 or more, on measuring adhesive force as described in the description, and/or

iii) the occurrence of peeling of the coating layer is less than 2 % for 50 on measuring blocking test as described in the description.

In an embodiment, the present disclosure provides a method for storing and/or transporting the composite separator, wherein the composite separator is used in a state of winding and the wound composite separator is stored or transported at a temperature of 50 to 70°C as well as at 25°C.

In a further embodiment, the present disclosure provides a use of the composite separator without causing blocking between the adhesive layer and the porous separator, optionally also without causing blocking between the adhesive layer and a ceramic layer.

In an embodiment, a method for facilitating alignment of the battery assembly after winding, wherein the battery assembly contains the composite separator.

In another general aspect, a lithium secondary battery includes the composite separator according to an embodiment.

In another general aspect, a use of the lithium secondary battery in an electric vehicle, a battery charging station, solar power generation and/or wind power generation.

Other features and aspects will be apparent from the following detailed description, the drawings, and the claims.

## BRIEF DESCRIPTION OF THE DRAWINGS

FIG. 1 is an SEM photograph of a composite separator according to Example 1 of the present disclosure.
FIG. 2 is an SEM photograph of a composite separator according to Comparative Example 1 of the present disclosure.
FIG. 3 is a cross-sectional view of a composite separator according to an embodiment of the present disclosure.
FIG. 4 is a cross-sectional view of a composite separator according to an embodiment of the present disclosure.

## DETAILED DESCRIPTION OF EMBODIMENTS

Hereinafter, the present disclosure will be described in detail. However, this is merely illustrative, and the present disclosure is not limited to specific embodiments which are illustratively described.

In addition, unless otherwise defined, all the technical terms and scientific terms have the same meanings as commonly understood by those skilled in the art to which the present disclosure pertains. The terms used in the description of the present disclosure are merely used to effectively describe a specific embodiment, but are not intended to limit the present disclosure.

In addition, unless the context clearly indicates otherwise, singular forms used in the specification and the scope of the accompanying claims are intended to include plural forms.

In addition, unless explicitly described to the contrary, "comprising" any components will be understood to imply further inclusion of other components rather than the exclusion of any other components.

In addition, unless otherwise specifically defined in the present disclosure, when one layer or member is disposed "on" another layer or member, it means not only a case where one layer or member is brought into contact with another member, but also a case where still another layer or member is present between the two layers or the two members.

In addition, the terms "about" and "substantially" used in the present specification are used as a numerical value or an approximate numerical value in the meanings mentioned when an inherent tolerance is suggested in a preparation or a substance, and are used to prevent unconscious infringers from illegally using the accurate or absolute numbers disclosed in the present disclosure to help understanding of the present disclosure.

In the present disclosure, the term "average particle diameter" refers to "D50", and "D50" refers to a particle diameter of inorganic particles and organic particles which corresponds to 50% of a volume-based integration fraction. The average particle diameter may be derived from particle size distribution results analyzed using S3500 available from Microtrac Retsch GmbH by collecting samples of the inorganic particles and organic particles to be measured in accordance with ISO 13320-1 standard. In addition, "D90" refers to a particle diameter of particles which corresponds to 90% of a volume-based integration fraction, and "D10" refers to a particle diameter of inorganic particles and organic particles which corresponds to 10% of a volume-based integration fraction. D90 and D10 may be derived in the same manner as in D50.

In the present disclosure, the term "organic particle" refers to a particulate organic binder. In addition, in order to distinguish particles having different average particle diameters D50 and different glass transition temperatures, the organic particles are denoted as first organic particles and second organic particles, respectively.

In the present disclosure, the term "glass transition temperature ($T_g$)" refers to a temperature range in which a glass transition occurs, and refers to a value measured using a dilatometer or a differential scanning calorimeter (DSC). The detailed measurement method is explained afterward.

In the present disclosure, the term "composite separator" refers to a form including an adhesive layer formed on one surface or both surfaces of a porous separator, and the "porous separator" may be in the form of a porous substrate itself, or may be in the form in which a porous ceramic layer (a porous inorganic particle layer may also be used with the same meaning) is formed on one surface or both surfaces of the porous substrate. The porous ceramic layer may have pores formed between inorganic particles connected and fixed by a binder.

In the present disclosure, "blocking" is measured by bringing two sheets of adhesive layers of a composite separator into contact with each other. That is, in a case where an adhesive layer is formed on only one surface of the composite separator, blocking is evaluated by preparing two sheets of composite separators, stacking the composite separators so that the adhesive layers are brought into contact with each other, pressurizing the stacked composite separators at a temperature of 50°C and a pressure of 1.7 MPa for 2 hours, and then peeling the adhesive layers at a speed of 300 mm/min and an angle of 180°. In addition, in a case where an adhesive layer is formed on both surfaces of the composite separator, blocking is evaluated by preparing two sheets of composite separators, selecting any one surface of the both surfaces, stacking the composite separators so that the adhesive layers are brought into contact with each other, pressurizing the stacked composite separators at a temperature of 50°C and a pressure of 1.7 MPa for 2 hours, and then peeling the adhesive layers at a speed of 300 mm/min and an angle of 180°. In this case, the adhesive layers formed on the both surfaces may have the same composition.

Hereinafter, an embodiment of the present disclosure will be described.

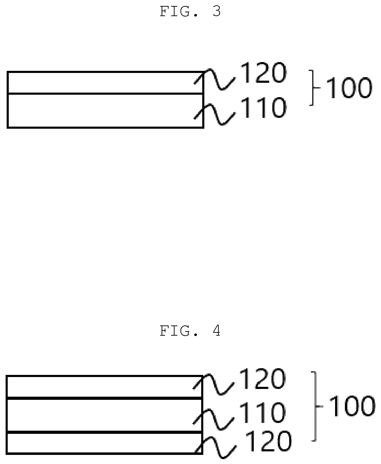

As illustrated in FIGS. 3 and 4, in an embodiment of the present disclosure relates to a composite separator 100 including an adhesive layer 120 formed on one surface or both surfaces of a porous separator 110 including a porous substrate or a porous ceramic layer (a porous inorganic particle layer may also be used with the same meaning) formed on one surface or both surfaces of the porous substrate and having pores formed between inorganic particles connected and fixed by a binder, wherein the adhesive layer includes two or more types of organic particles having different average particle diameters D50 and different glass transition temperatures.

An aspect of the present disclosure provides a composite separator including an adhesive layer formed on the outermost layer of at least one surface of a porous separator, wherein the adhesive layer includes first organic particles and second organic particles having different average particle diameters D50 and different glass transition temperatures, the first organic particles have a lower glass transition temperature and a smaller average particle diameter than the second organic particles, and the first organic particles and the second organic particles satisfy the following Relational Expression 1:

$$[\text{Relational Expression 1}]$$

$$3 \leq T_2/T_1 \times R_2/R_1 \leq 8.5$$

wherein $T_1$ is the glass transition temperature (°C) of the first organic particles, $T_2$ is the glass transition temperature (°C) of the second organic particles, $R_1$ is the average particle diameter D50 ($\mu$m) of the first organic particles, and $R_2$ is the average particle diameter D50 ($\mu$m) of the second organic particles.

As Relational Expression 1 is satisfied, blocking may be prevented from occurring during winding of the composite separator into a roll; and storage and/or transport of the wound composite separator, and the effects of maintaining alignment well during or after secondary battery assembly and improving a capacity retention rate of the battery may be achieved at the same time.

In an embodiment, the adhesive layer may be an adhesive layer including only both the first organic particles and the second organic particles.

In an embodiment, the adhesive layer may be stacked to face a negative electrode and a positive electrode of a lithium secondary battery. That is, when a lithium secondary battery is assembled, the adhesive layer is stacked on the negative electrode or the positive electrode to exhibit an adhesion force.

In an embodiment, areas of the porous substrate, the porous ceramic layer, and the adhesive layer may be substantially the same as or different from each other. For example, the porous ceramic layer may be formed on the porous substrate over the entire surface having the same area as that of the porous substrate, or may be formed having an area smaller than that of the porous substrate. In addition, the adhesive layer may be formed on the entire surface having the same area as that of the porous substrate or the porous ceramic layer, or may be formed having an area smaller than that of the porous substrate or the porous ceramic layer.

For example, the area of the formed adhesive layer may be 10 to 100% with respect to the total area of the porous ceramic layer or the porous substrate, and may be 99% or less, 95% or less, 90% or less, 80% or less, 70% or less, 60% or less, 50% or less, 40% or less, 30% or less, 20% or less, 10% or more, 20% or more, 50% or more, or between the above numerical values. For example, the area of the formed adhesive layer may be 10 to 90% or 20 to 80%, but is not limited as long as the object of the present disclosure may be achieved.

In an embodiment, the porous ceramic layer may be formed to have a thickness of 1 to 50%, 1 to 45%, 1 to 40%, or 1 to 35% of the thickness of the entire composite separator. For example, the thickness of the porous ceramic layer may be 5 $\mu$m or less, 4 $\mu$m or less, 3 $\mu$m or less, 2 $\mu$m or less, 1 $\mu$m or less, 1 to 5 $\mu$m, or in any range between the above numerical values, but is not limited thereto.

In an embodiment, a coating amount of the adhesive layer may be 0.05 to 1.0 g/m$^2$, 0.1 to 0.8 g/m$^2$, 0.1 to 0.5 g/m$^2$, 0.1 to 0.3 g/m$^2$, or in any range between the above numerical values, but is not limited thereto. In an embodiment, the adhesive layer may be an adhesive layer in which the first organic particles and the second organic particles are attached to at least one surface of the porous separator in the above coating amount. In the coating amount, a weight is the sum of the weights of the first organic particles and the second organic particles, and may be measured after sufficiently drying.

In an embodiment, when the composite separator of the present disclosure includes the adhesive layer including first organic particles and second organic particles having different average particle diameters D50 and different glass transition temperatures, the first organic particles have a lower glass transition temperature and a smaller average particle diameter than the second organic particles, and the first organic particles and the second organic particles satisfy Relational Expression 1, blocking does not occur between the adhesive layers. In a case where the occurrence of blocking between the adhesive layers was evaluated by the above method, when no blocking occurred, it was found that blocking was prevented even under severe conditions that occur during storage and transport after winding the composite separator, thereby completing the present disclosure. For example, it can be confirmed that blocking does not occur even when the wound roll is stored at 50 to 70°C for 7 days. The occurrence of blocking is evaluated by the method described in a measurement method described below. In addition, no blocking means that blocking is in a range where it is determined as OK or PASS in a blocking evaluation method described below.

$$[\text{Relational Expression 1}]$$

$$3 \leq T_2/T_1 \times R_2/R_1 \leq 8.5$$

wherein $T_1$ is the glass transition temperature (°C) of the first organic particles, $T_2$ is the glass transition temperature (°C) of the second organic particles, $R_1$ is the average particle diameter D50 ($\mu$m) of the first organic particles, and $R_2$ is the average particle diameter D50 ($\mu$m) of the second organic particles.

In an embodiment, an adhesive force of the adhesive layer to a positive electrode may be 5 gf/cm or more, 6 gf/cm or more, 7 gf/cm or more, 8 gf/cm or more, 9 gf/cm or more, 10 gf/cm or more, 20 gf/cm or less, or in any range between the above numerical values. A higher adhesive force is preferable, but from the viewpoint of preventing blocking after winding and at the same time facilitating alignment during or after battery assembly, the adhesive force to the positive electrode may be 5 to 15 gf/cm. When the above range is satisfied, it may be more advantageous in providing an effect in which blocking does not occur not only at room temperature but also at 50 to 70°C.

The positive electrode is not limited, and may be formed of a positive electrode slurry prepared by adding lithium metal oxide including lithium-cobalt composite oxide (LiCoO$_2$), carbon black as a conductive agent, and polyvinylidene fluoride (PVDF) as a binder to N-methyl-2-pyrrolidone (NMP) as a solvent.

In an embodiment, an adhesive force of the adhesive layer to a negative electrode may be 2 gf/cm or more, 3 gf/cm or more, 4 gf/cm or more, 5 gf/cm or more, 6 gf/cm or more, 7 gf/cm or more, 15 gf/cm or less, or in any range between the above numerical values, but is not limited thereto.

The negative electrode is not limited, and may be formed of a negative electrode slurry prepared by adding lithium-intercalated material including artificial graphite, lithium, soft and hard carbon and silicon-based material, acrylic-based latex as a binder, and carboxymethyl cellulose as a thickener to water as a solvent.

The composite separator according to an embodiment of the present disclosure may have a thermal shrinkage of 3% or less, 2% or less, 1.5% or less, 1% or less, or 0.5% or less when measured after being left at 150°C for 1 hour, and as the composite separator has the above low thermal shrinkage, ignition or rupture due to abnormal phenomena such as a rapid temperature rise within the lithium secondary battery may be prevented.

In addition, a lithium secondary battery including the composite separator according to an embodiment of the present disclosure may have a discharge capacity ratio of 90% or more, 95% or more, or 97% or more, the discharge capacity ratio being calculated by the following equation when a cycle evaluation is performed by charging and discharging the lithium secondary battery 300 times at a discharge rate of 1 C and then measuring a discharge capacity to determine a degree of decrease in capacity compared to an initial capacity based on an initial cell capacity of 1,800 mAh.

Discharge capacity ratio = (Battery capacity measured after 300 cycles)/Initial battery capacity

In addition, an adhesion of the composite separator may exhibit excellent adhesion. When electrodes are cut into pieces of 4 cm in width and 6 cm in length, and the four cut positive electrodes and four cut negative electrodes are alternately stacked on a surface of the composite separator according to an embodiment of the present disclosure, heated and pressurized in a temperature atmosphere of 80°C at 10 kgf/cm$^2$ for 30 seconds, and lifted vertically, there may be substantially no electrodes that fall.

In addition, in the present disclosure, as for the property of non-blocking, when the composite separator including the ceramic layer and the adhesive layer is wound to 1,000 m or more and stored in an oven at each of 50°C and 70°C for 12 hours, and then the wound composite separator is unwound, there may be no inter-surface adhesion between the adhesive layers that are brought into contact with each other and no detachment of the ceramic layer.

Hereinafter, each component of the composite separator according to an embodiment of the present disclosure will be described by way of example.

[Porous Separator]

As an embodiment of the present disclosure, the porous separator may be formed of a porous substrate, or may include a porous ceramic layer formed on one surface or both surfaces of a porous substrate and including inorganic particles.

The porous substrate may be a film, a sheet, or the other thin material formed of a polyolefin-based resin, and may be used without limitation as long as it is a microporous film adopted in the related art. For example, the porous substrate is not particularly limited as long as it is a porous film that may be applied to a battery while having pores inside a non-woven fabric, paper, and a microporous film thereof or having pores with inorganic particles on a surface thereof.

The polyolefin-based resin may be a polyolefin-based resin alone or a mixture, and as a specific example, the polyolefin-based resin may be one or a mixture of two or more selected from polyethylene, polypropylene, and a copolymer thereof. In addition, the porous substrate may be manufactured using the polyolefin-based resin alone or using a polyolefin-based resin as a main component and additionally including inorganic particles or organic particles. In addition, the porous substrate may be used in a stacked form, for example, the porous substrate may be formed by constituting the polyolefin-based resin into multiple layers, and when the porous substrate is formed into multiple layers, one layer or all layers may include inorganic particles and organic particles in the polyolefin-based resin.

A thickness of the porous substrate is not particularly limited, and may be 5 to 30 $\mu$m. As the porous substrate, a porous substrate formed by stretching may be mainly adopted, but is not limited thereto.

The porous ceramic layer may have pores formed between the inorganic particles connected by a binder.

The binder may be included in an amount of 0.1 to 20 parts by weight, 0.1 to 10 parts by weight, or 1 to 5 parts by weight, with respect to 100 parts by weight of the inorganic particles, and may be used without limitation as long as it is a binder commonly used in the related art. As described above, as the binder is used in a significantly smaller amount than the inorganic particles, the porous ceramic layer has a structure in which inorganic particles are connected to each other and has pores formed by the inorganic particles being in surface contact with each other, thereby ensuring porosity.

Examples of the binder include various water-soluble and water-insoluble resins such as an acrylic-based resin such as polymethyl methacrylate and a copolymer thereof or polyacrylamide, an ester resin, polyamide, polyimide, a fluorine-based resin, polyacrylonitrile, polyethylene oxide, a cellulose-based resin, a polyvinyl alcohol-based resin, polyvinylpyrrolidone, an ethylene vinyl acetate copolymer, and cyanoethyl pullulan, and a mixture thereof, and the binder may be used in a form that is dissolved in a solvent or in the form of particles, but is not limited thereto.

The inorganic particles of the porous ceramic layer may be used without limitation as long as they are commonly used in the related art. For example, the inorganic particles may be one or two or more inorganic particles selected from alumina, boehmite, aluminum hydroxide, titanium oxide, barium titanium oxide, magnesium oxide, magnesium hydroxide, silica, clay, and glass powder, but are not limited thereto.

The inorganic particles may be included in an amount of 70 wt% or more and 99.5 wt% or less with respect to 100 wt% of the total weight of the porous ceramic layer. For example, the inorganic particles may be included in an amount of 70 wt% or more and 99 wt% or less, 70 wt% or more and 98 wt% or less, 80 wt% or more and 98 wt% or less, 85 wt% or more and 98 wt% or less, or 90 wt% or more and 98 wt% or less, but are not limited thereto. When the porous ceramic layer includes the binder and the inorganic particles in the contents described above, the pores of the porous ceramic layer may be secured, and an adhesion force between the porous substrate and the porous ceramic layer or between the inorganic particles may be secured.

An average particle diameter D50 of the inorganic particles is not limited, and may be, for example, 50 nm to 2 $\mu$m or 50 to 1,000 nm.

In an embodiment, the inorganic particles may be used by combining two types or two or more types of inorganic particles having different average particle diameters. For example, in the case of the two types of inorganic particles having different average particle diameters, an average particle diameter of first inorganic particles may be 50 to 500 nm or 100 to 400 nm, and an average particle diameter of second inorganic particles may be 500 to 2,000 nm or 600 to 1,000 nm.

In an embodiment, a thickness of the porous ceramic layer may be 5 μm or less, 4 μm or less, 3 μm or less, 2 μm or less, 1 μm or less, 1 to 5 μm, or in any range between the above numerical values, but is not limited thereto.

[Adhesive Layer]

The adhesive layer of the present disclosure may be formed on the outermost layer of at least one surface of the porous separator.

When the adhesive layer of the present disclosure includes first organic particles and second organic particles having different average particle diameters D50 and different glass transition temperatures, the first organic particles have a lower glass transition temperature and a smaller average particle diameter than the second organic particles, and the first organic particles and the second organic particles satisfy Relational Expression 1, the object of the present disclosure may be more easily achieved:

[Relational Expression 1]

$$3 \leq T_2/T_1 \times R_2/R_1 \leq 8.5$$

wherein $T_1$ is the glass transition temperature (°C) of the first organic particles, $T_2$ is the glass transition temperature (°C) of the second organic particles, $R_1$ is the average particle diameter D50 (μm) of the first organic particles, and $R_2$ is the average particle diameter D50 (μm) of the second organic particles.

The composite separator including the adhesive layer according to the present disclosure may achieve an effect in which blocking does not occur between the adhesive layers even at a high temperature, may prevent alignment defects during or after battery assembly, and, at the same time, may provide an excellent capacity retention rate of the battery.

In an embodiment, the first organic particles and the second organic particles may be used without limitation as long as they satisfy Relational Expression 1.

In an embodiment, the first organic particles and the second organic particles may have a swelling ratio of 300 to 500% according to the following Equation 1 when immersed in an electrolyte. When the swelling ratio is within the above range, it is advantageous in achieving the object of the present disclosure, which is more preferable, but the swelling ratio is not limited thereto.

[Equation 1]

$$\text{Swelling ratio} = W2/W1 \times 100$$

W2 is a weight measured after immersed in the electrolyte, and W1 is a weight measured before immersed in the electrolyte.

In this case, the swelling ratio may be measured according to the measurement method of the examples described below. The electrolyte may be obtained by mixing ethylene carbonate, ethyl methyl carbonate, and dimethyl carbonate in a volume ratio of 3:5:2, and leaving them at 50°C for 48 hours, the electrolyte was drained, and then, a weight of the organic particles was measured to calculate a rate of change in weight.

In an embodiment for satisfying Relational Expression 1, the first organic particles may have a glass transition temperature of 90°C or lower, and the second organic particles may have a glass transition temperature of 95°C or higher. For example, the first organic particles may have a glass transition temperature of 40 to 90°C, 40 to 85°C, 45 to 85°C, 45 to 70°C, 50 to 70°C, or 50 to 65°C, but are not limited thereto. The second organic particles may have a glass transition temperature of 95 to 150°C, 95 to 130°C, 95 to 110°C, or 100 to 110°C, but are not limited thereto.

In an embodiment, the first organic particles may have a lower glass transition temperature than the second organic particles, and the first organic particles and the second organic particles may have a glass transition temperature difference of 5°C or higher. That is, the glass transition temperature of the second organic particles may be higher than that of the first organic particles by 5°C or higher, 10°C or higher, 20°C or higher, 30°C or higher, 35°C or higher, 40°C or higher, 45°C or higher, 50°C or higher, 55°C or higher, 60°C or higher, 100°C or lower, 90°C or lower, 80°C or lower, 70°C or lower, 65°C or lower or in any range between the above numerical values. for example, 10 to 100°C, 10 to 90°C, 10 to 70°C, 30 to 70°C, 30 to 65°C, 35 to 65°C, 30 to 60°C, 40 to 60°C, 50 to 60°C, or 45 to 55°C, but is not limited thereto.

In an embodiment for satisfying Relational Expression 1, the first organic particles may have an average particle diameter of 100 to 1,000 nm, and the second organic particles may have an average particle diameter of 500 to 2,000 nm. For example, the first organic particles may have an average particle diameter of 100 to 1,000 nm, 200 to 800 nm, 200 to 600 nm, 300 to 700 nm, 400 to 600 nm or 500 to 600 nm, but are not limited thereto. The second organic particles may have an average particle diameter of 500 to 2,000 nm, 600 to 1,800 nm, 800 to 1,500 nm, 900 to 1,500 nm, 1,000 to 1,500 nm or 1,300 to 1,500 nm, but are not limited thereto. The average particle diameter refers to an average particle diameter defined as D50.

In an embodiment, the first organic particles may have a smaller average particle diameter than the second organic particles, and the average particle diameter of the second organic particles is twice or more the average particle diameter of the first organic particles. For example, a difference in the average particle diameter between the second organic particles and the first organic particles may be 100 to 2,000 nm, 200 to 1,500 nm, 300 to 1,500 nm, 300 to 1,100 nm, 600 to 1,100 nm or 400 to 900 nm, but is not limited thereto.

In an embodiment, the adhesive layer may be coated with the first organic particles and the second organic particles in a total content of 0.05 to 1.0 $g/m^2$, 0.1 to 0.8 $g/m^2$, 0.1 to 0.5 $g/m^2$, 0.2 to 0.4 $g/m^2$, or 0.1 to 0.3 $g/m^2$, but is not limited thereto.

In an embodiment, the first organic particles and the second organic particles may be included in the adhesive layer in a weight ratio (first organic particles:second organic particles) of 50 to 99:50 to 1, 55 to 95:45 to 5, 60 to 90:40 to 10, or 70 to 90:30 to 10, but are not limited thereto. Although not limited to the above range, as the content of the second organic particles having a large particle size and a relatively high glass transition temperature is set to be smaller than the content of the first organic particles, a binding force with the electrode may be ensured even at a low temperature, and binding to the porous ceramic layer may also be increased.

In an embodiment, the first organic particles and the second organic particles may be polymer particles that may be prepared by emulsion polymerization or suspension polymerization, and may be non-crosslinked or crosslinked particles. As an example, the first organic particles and the second organic particles may be organic particles formed of an acrylic-based polymer, a fluorine-based polymer, or a copolymer thereof. The first organic particles and the second organic particles may be particles formed of the same polymer or particles formed of different polymers.

Examples of the acrylic-based polymer include polymers obtained by polymerizing one or more monomers selected from $C_1$-$C_{10}$ alkyl (meth)acrylates; (meth)acrylates; (meth)acrylonitriles such as acrylonitrile and methacrylonitrile; aromatic vinyl monomers such as styrene, $\alpha$-methylstyrene, styrenesulfonic acid, butoxystyrene, and vinylnaphthalene; and maleimide derivatives such as maleimide and phenylmaleimide. The acrylic-based polymer is not limited thereto and may be prepared by mixing various monomers.

For example, the first organic particle may be an acrylic-based copolymer obtained by copolymerizing a $C_1$-$C_{10}$ alkyl (meth)acrylate and a (meth)acrylonitrile. The (meth)acrylate refers to an acrylate or a methacrylate. Examples of the $C_1$-$C_{10}$ alkyl (meth)acrylate include, but are not limited to, methyl acrylate, methyl methacrylate, ethyl acrylate, ethyl methacrylate, butyl acrylate, and butyl methacrylate.

For example, the second organic particle may be an acrylic-based copolymer copolymerized using an aromatic vinyl monomer such as styrene and a monomer mixture including a $C_1$-$C_{10}$ alkyl (meth)acrylate, and the glass transition temperature may be increased by controlling a content of the aromatic vinyl monomer.

[Method of Manufacturing Composite Separator]

Hereinafter, a method of manufacturing a composite separator of the present disclosure will be described.

A method of manufacturing a composite separator for a secondary battery according to an embodiment of the present disclosure includes applying an aqueous dispersion containing first organic particles and second organic particles onto one surface or both surfaces of a porous separator and drying the applied dispersion to form an adhesive layer.

In addition, the method of manufacturing a composite separator for a secondary battery according to an embodiment of the present disclosure includes: a) applying a slurry containing inorganic particles and a binder onto one surface or both surfaces of a porous substrate and drying the applied slurry to form a porous ceramic layer; and b) applying an aqueous dispersion containing first organic particles and second organic particles onto one surface or both surfaces of a ceramic coated separator on which the porous ceramic layer is formed and drying the applied dispersion to form an adhesive layer. In a case that a porous separator is a porous substrate not containing the porous ceramic layer, the step a) may be omitted and the aqueous dispersion in the step b) may be applied onto one or both surface of the porous substrate.

Each component is the same as described above.

The slurry for forming the porous ceramic layer may be an aqueous slurry that uses water as a dispersion medium.

The dispersion for forming the adhesive layer may use water as a dispersion medium. The first organic particles and the second organic particles may be provided in the form of particles dispersed in water through emulsion or suspension polymerization.

As the coating method, any common method known in the related art may be applied without limitation, and non-limiting examples thereof include roll coating, spin coating, dip coating, bar coating, die coating, slit coating, inkjet printing, and a combination of these methods.

The drying step is not particularly limited, and a drying temperature may be 100°C or lower, and may be, for example, 30 to 100°C or 40 to 100°C. When the drying is performed at the above temperature, the coating layer may be dried uniformly without affecting the physical properties of the porous substrate, thereby preventing coating defects.

In addition, the method may include, after the drying, winding the composite separator into a roll and storing and transporting the wound separator.

[Lithium Secondary Battery]

Another aspect of the present disclosure provides a lithium secondary battery including the composite separator for a secondary battery described above. The lithium secondary battery may be manufactured by including the composite separator for a secondary battery according to an embodiment of the present disclosure, a positive electrode, a negative electrode, and a non-aqueous electrolyte.

In an embodiment, the lithium secondary battery is manufactured by a general manufacturing method of arranging and assembling a negative electrode, a composite separator, and a positive electrode, and injecting an electrolyte. Therefore, the manufacturing method will not be described in detail herein.

In this case, the positive electrode, negative electrode, and non-aqueous electrolyte may be used without limitation as long as they are generally used in a lithium secondary battery.

In an embodiment, the positive electrode and negative electrode may be manufactured by mixing and stirring a positive electrode active material and a negative electrode active material with a solvent, and, as necessary, a binder, a conductive agent, a dispersant, and the other necessary additives to prepare compositions, applying the compositions to current collectors formed of metal materials, drying the applied compositions, and then performing pressing. The positive electrode active material may be used as long as it is an active material commonly used in a positive electrode of a secondary battery. For example, lithium metal oxide particles containing one or two or more metals selected from the group consisting of Ni, Co, Mn, Na, Mg, Ca, Ti, V, Cr, Cu, Zn, Ge, Sr, Ag, Ba, Zr, Nb, Mo, Al, Ga, B, and a combination thereof may be used.

The negative electrode active material may be used as long as it is an active material commonly used in a negative electrode of a secondary battery. The negative electrode active material of the lithium secondary battery is preferably a material capable of lithium intercalation. As a non-limiting example, the negative electrode active material may be one or two or more materials selected from the group consisting of negative electrode active materials such as lithium (metal lithium), soft carbon, hard carbon, graphite, silicon, a Sn alloy, a Si alloy, a Sn oxide, a Si oxide, a Ti oxide, a Ni oxide, an Fe oxide (FeO), and lithium-titanium oxide ($LiTiO_2$ or $Li_4Ti_5O_{12}$).

As the conductive agent, a common conductive carbon material may be used without particular limitation.

The non-aqueous electrolyte contains a lithium salt as an electrolyte and an organic solvent, and the lithium salt may be used without limitation as long as it is commonly used in an electrolyte for a lithium secondary battery and may be represented by $Li^+X^-$.

An anion of the lithium salt is not particularly limited, and one or two or more selected from $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$ may be used. As the organic solvent, one or a mixture of two or more selected from the group consisting of propylene carbonate, ethylene carbonate, diethyl carbonate, dimethyl carbonate, ethylmethyl carbonate, methylpropyl carbonate, dipropyl carbonate, dimethyl sulfoxide, acetonitrile, dimethoxyethane, diethoxyethane, sulfolane, $\gamma$-butyrolactone, and tetrahydrofuran may be used.

The non-aqueous electrolyte may be injected into an electrode structure composed of a positive electrode, a negative electrode, and a composite separator interposed between the positive electrode and the negative electrode.

An outer shape of the lithium secondary battery is not particularly limited, and may be selected from a cylindrical shape using a can, a square shape, a pouch shape, a coin shape, and the other form of the battery.

Hereinabove, although the embodiments of the present disclosure have been described in detail, it will be apparent to those skilled in the art to which the present disclosure pertains that the present disclosure may be variously modified without departing from the spirit of the present disclosure as disclosed in the accompanying claims. Therefore, changes in the embodiments of the present disclosure are intended to fall within the scope of the present disclosure.

Hereinafter, examples of the present disclosure will be further described with reference to specific experimental examples. The examples and comparative examples included in the experimental examples are merely illustrative of the present disclosure and do not limit the scope of the accompanying claims, it is obvious to those skilled in the art that various modifications and alterations may be made without departing from the spirit and scope of the present disclosure, and it is obvious that these modifications and alterations are within the accompanying claims.

1. Adhesion Force to Electrode

Electrodes were cut into pieces of 4 cm in width and 6 cm in length, the four cut positive electrodes and four cut negative electrodes were alternately stacked on a surface of a composite separator, bonded in a temperature atmosphere of 80°C at 10 kgf/cm$^2$ for 30 seconds, and unfolded, and then, the number of electrodes adhering to the composite separator was evaluated.

A: All 8 electrodes (4 anodes and 4 cathodes) remained adhered, B: 6 or 7 electrodes remained adhered, C: 4 or 5 electrodes remained adhered, D: fewer than 4 electrodes remained adhered

The positive electrode and negative electrode used in the evaluation were manufactured as follows.

Manufacture of positive electrode: A positive electrode slurry was prepared by adding 94 wt% of lithium-cobalt composite oxide (LiCoO$_2$) as a positive electrode active material, 3.5 wt% of carbon black as a conductive agent, and 2.5 wt% of polyvinylidene fluoride (PVDF) as a binder to N-methyl-2-pyrrolidone (NMP) as a solvent. The prepared slurry was applied to an aluminum (Al) thin film having a thickness of 30 $\mu$m, the applied slurry was dried at a temperature of 120°C, and then roll-pressing was performed, thereby manufacturing a positive electrode having a thickness of 150 $\mu$m.

Manufacture of negative electrode: A negative electrode mixed slurry was prepared by adding 95 wt% of artificial graphite, 3 wt% of a binder (acrylic-based latex having a T$_g$ of - 52°C), and 2 wt% of a thickener (carboxymethyl cellulose (CMC)) to water as a solvent. The prepared slurry was applied to a copper (Cu) thin film having a thickness of 20 $\mu$m, the applied slurry was dried at a temperature of 120°C, and then roll-pressing was performed, thereby manufacturing a negative electrode having a thickness of 150 $\mu$m.

2. Blocking Test

Two samples were prepared, the adhesive layers were brought into contact with each other, pressurized at a temperature of 50°C and a pressure of 1.7 MPa for 2 hours, and then peeled at a speed of 300 mm/min and in the direction of 180°, and whether peeling of the coating layer between the adhesive layers occurred was evaluated. The occurrence of peeling of the coating layer in a 50 $\times$ 50 $\mu$m area was evaluated by observation with the naked eye and SEM.

PASS: When observing with the naked eye and confirming five random 50 $\times$ 50 $\mu$m areas over the entire area of the sample with SEM, no peeling of the coating layer occurs.

OK: When observing with the naked eye, no peeling of the coating layer is observed, and when confirming five random 50 $\times$ 50 $\mu$m areas over the entire area of the sample with SEM, less than 2% of the area of coating layer peeling is observed.

Fail: Even when observing with the naked eye, peeling of the coating layer is observed, or when confirming five random 50 $\times$ 50 $\mu$m areas over the entire area of the sample with SEM, 2% or more of the area of coating layer peeling is observed. If any of the five random areas shows more than 2% peeling, it is considered a fail.

3. Thermal Shrinkage

After leaving a separator with a size of 10 cm $\times$ 10 cm at 15 0°C for 1 hour, a rate of decrease in length was measured and a thermal shrinkage was calculated in both a machine direction and a width direction according to the following equation.

Thermal shrinkage (%) = ((Length before heating -Length after heating)/Length before heating) $\times$ 100

MD is a thermal shrinkage in a machine direction, and TD is a thermal shrinkage in a transverse direction.

4. Increase in Permeability

An increase in permeability after forming the adhesive layer compared to the ceramic coated separator was calculated by measuring a Gurley permeability using the following equation.

Increase in permeability = Permeability of coated separator after adhesive layer coating - Permeability of coated separator after ceramic coating

The Gurley permeability is measured according to ASTM D 726 standard using a densometer available from Toyo Seiki Seisaku-sho, Ltd. (TOYOSEIKI), and the time taken for 100 ml of air to pass through an area of 1 in$^2$ (6.45 cm$^2$) of the separator is recorded in seconds. A unit of the Gurley permeability is sec/100 ml.

5. Battery Lifespan Discharge Capacity Ratio Compared to Initial Capacity

A pouch-type battery was assembled using the same stacking method as in the evaluation of the adhesion force to the electrode, each assembled battery was subjected to heat pressing at 80°C and 10 kgf/cm$^2$ for 30 seconds before electrolyte injection, and an electrolyte obtained by mixing ethylene carbonate (EC), ethyl methyl carbonate (EMC), and dimethyl carbonate (DMC) in a volume ratio of 3:5:2 and containing 1 M lithium hexafluorophosphate (LiPF$_6$) dissolved therein was injected, thereby manufacturing a lithium secondary battery.

Each of the manufactured batteries was subjected to a cycle evaluation by charging and discharging the battery 300 times at a discharge rate of 1 C, and then measuring a discharge capacity to measure a degree of decrease in capacity compared to an initial capacity.

Discharge capacity ratio = (Battery capacity measured after 300 cycles)/Initial battery capacity (1.8 Ah)

6. Method of Measuring Average Particle Diameter

An average particle diameter D50 for the inorganic particles and the particulate binder was measured using a particle size analyzer, S3500 available from Microtrac Retsch GmbH, according to the ISO 13320-1 standard.

7. Method of Measuring Glass Transition Temperature(T$_g$)

Analysis was performed by a differential scanning calorimeter (DSC) (DSC-822E available from Mettler Toledo). As analysis conditions, the solvent was removed, 5 mg of a solidified sample was heated from -50°C to 200°C at a scanning rate of 10 °C/min under nitrogen conditions to completely melt the sample, cooled at 10 °C/min to solidify the sample, and heated again at 10 °C/min in a range of -50°C to 200°C, and then, a glass transition temperature was measured. T$_g$ was determined as the inflection point where the curve changes significantly in the DSC graph.

8. Thickness (μm)

A thickness of the separator was determined by the following method. The separators were stacked in 10 layers, thicknesses were measured at five random points selected along a transverse direction using a thickness gauge available from Mitutoyo Corporation, and the measured thicknesses were added up and divided by 5 to derive an average thickness of the 10 layers of the separators. The obtained value was divided by 10 again to derive an average thickness of the entire single separator.

[Example 1]

1) Manufacture of Ceramic Coated Separator (Porous Separator Coated with Porous Ceramic Layer)

The following slurry for an inorganic particle layer was coated using a bar coater at a speed of 5 m/min onto both surfaces of a polyethylene porous substrate (ENPASS available SK Innovation Co., Ltd.) having a Gurley permeability of 126 sec/100 ml and a thickness of 9 μm to form a coating layer, and the coating layer was sufficiently dried at 40°C to form a porous ceramic layer. After drying, a coating thickness of the porous ceramic layer formed on each of both surfaces was 1.5 μm.

The slurry for an inorganic particle layer was mixed with 29.1 wt% of boehmite particles having an average particle diameter (D50) of 300 nm and 67.9 wt% of boehmite particles having an average particle diameter (D50) of 700 nm as inorganic particles, and 3 wt% of a polyacrylamide resin, and water as a solvent was added and stirred, thereby preparing a composition having a solid content concentration of 25 wt%.

2) Manufacture of Composite Separator

A coating solution for an adhesive layer was coated using a bar coater at a speed of 5 m/min onto both surfaces of the ceramic coated separator to form an adhesive layer, and the adhesive layer was dried sufficiently at 40°C and then wound into a roll shape. A thickness of the adhesive layer formed on each of both surfaces was 0.5 μm, and a coating amount on each of the both surfaces was 0.3 g/m$^2$.

As the coating solution for an adhesive layer, a mixture was used, the mixture obtained by mixing a first organic particle dispersion of 17.5 g (an acrylic-based polymer using butyl methacrylate, methyl methacrylate, and acrylonitrile as monomers, D50: 300 nm, $T_g$: 40°C, solid content: 40 wt%) and a second organic particle dispersion of 15 g (an acrylic-based polymer using styrene and methyl methacrylate as monomers, D50: 900 nm, $T_g$: 100°C, solid content: 20 wt%). A solid content in the entire solution was 70:30 (first organic particles:second organic particles) in terms of weight ratio.

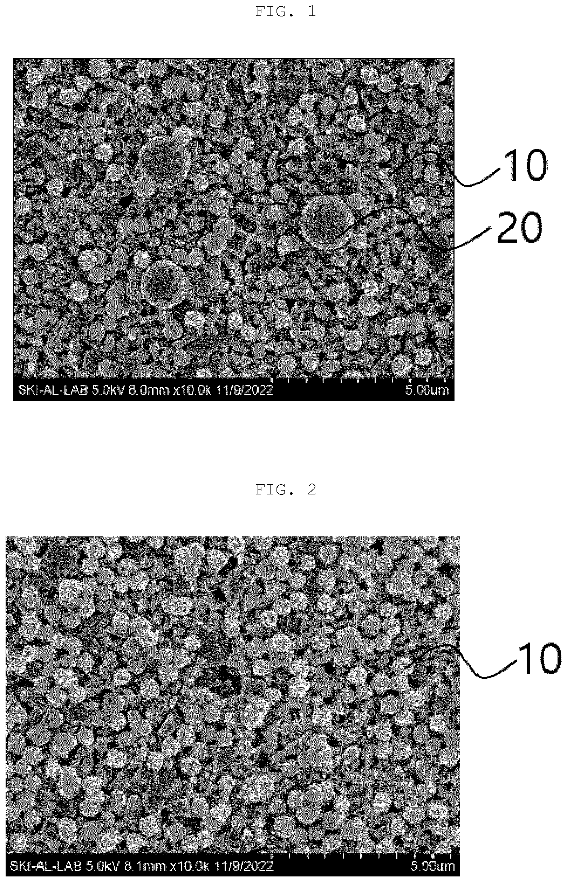

The physical properties of the manufactured composite separator were evaluated. The results are shown in Table 1. In addition, the surface was observed and illustrated in FIG. 1. As illustrated in FIG. 1, it was confirmed that the first organic particles 10 and the second organic particles 20 were evenly distributed.

[Examples 2 to 9]

Composite separators were manufactured in the same manner as that of Example 1, except that the type or content of organic particles in the coating solution for an adhesive layer was changed as shown in Table 1.

The physical properties of the manufactured composite separator were evaluated. The results are shown in Table 1.

[Comparative Examples 1 to 4]

Composite separators were manufactured in the same manner as that of Example 1, except that the coating solution for an adhesive layer was changed as shown in Table 2.

The physical properties of the manufactured composite separator were evaluated. The results are shown in Table 2.

[Table 1]

| | Example 1 | Example 2 | Example 3 | Example 4 | Example 5 | Example 6 | Example 7 | Example 8 | Example 9 |
|---|---|---|---|---|---|---|---|---|---|
| $T_1$ (°C) | 40 | 40 | 50 | 55 | 55 | 65 | 65 | 65 | 60 |
| $T_2$ (°C) | 100 | 102 | 110 | 105 | 110 | 110 | 110 | 110 | 95 |
| $R_1$ (nm) | 300 | 300 | 400 | 600 | 600 | 400 | 400 | 400 | 200 |
| $R_2$ (nm) | 900 | 1000 | 1500 | 1500 | 1000 | 1500 | 1300 | 1300 | 1000 |
| Relational Expression 1 | 7.5 | 8.5 | 8.3 | 4.8 | 3.3 | 8.25 | 5.5 | 5.5 | 7.9 |
| Weight ratio of first organic particles:second organic particles | 70:30 | 70:30 | 70:30 | 70:30 | 70:30 | 70:30 | 90:10 | 50:50 | 70:30 |
| Adhesion force to electrode | A | A | A | A | A | A | A | B | B |
| Blocking test results | OK | OK | Pass | Pass | Pass | Pass | Pass | Pass | Pass |
| Thermal shrinkage at 150°C MD/TD | 1.5/ 1.5 | 1.5/ 1.5 | 1.5/ 1.5 | 1.5/ 1.5 | 1.5/ 1.5 | 1.5/ 1.5 | 1.5/ 1.5 | 1.5/ 1.5 | 1.5/ 1.5 |
| Increase in permeability after adhesive layer coating (s) | 19 | 18 | 15 | 8 | 8 | 15 | 11 | 5 | 14 |
| Battery lifespan discharge capacity ratio compared to initial capacity (%) | 89 | 90 | 92 | 95 | 89 | 92 | 93 | 90 | 92 |

EP 4 618 290 A2

As shown in Table 1, it was confirmed that the adhesion force to the electrode was excellent and the anti-blocking properties were excellent as Relational Expression 1 was satisfied. In addition, even after forming the adhesive layer, it was confirmed that the increase in permeability was 20 seconds or shorter, which was lower than the permeability of the ceramic coated separator, and it was confirmed that the battery lifespan discharge capacity ratio compared to the initial capacity was 85% or more, which was excellent.

[Table 2]

| | Comparative Example 1 | Comparative Example 2 | Comparative Example 3 | Comparative Example 4 |
|---|---|---|---|---|
| $T_1$ (°C) | 65 | - | 50 | 70 |
| $T_2$ (°C) | - | 110 | 90 | 95 |
| $R_1$ (nm) | 400 | - | 200 | 600 |
| R2 (nm) | - | 1300 | 1000 | 900 |
| Relational Expression 1 | - | - | 9 | 2 |
| Weight ratio of first organic particles:second organic particles | 100:0 | 0:100 | 70:30 | 70:30 |
| Adhesion force to electrode | A | C | C | B |
| Blocking test results | Fail | Pass | OK | Fail |
| Thermal shrinkage at 150°C MD/TD | 1.5/1.5 | 1.5/1.5 | 1.5/1.5 | 1.5/1.5 |
| Increase in permeability after adhesive layer coating (s) | 15 | 5 | 25 | 14 |
| Battery lifespan discharge capacity ratio compared to initial capacity ( % ) | 85 | 80 | 76 | 77 |

As shown in Table 2, it was confirmed that, in the case where Relational Expression 1 did not satisfy the range of the present disclosure, the adhesive force and the anti-blocking properties were not satisfied at the same time, and the lifespan of the battery was significantly reduced.

As seen in Comparative Example 1, in the case where the second organic particles were not used, the adhesive force was exhibited, but there was a problem of the occurrence of blocking.

As seen in Comparative Example 2, in the case where only the second organic particles having a glass transition temperature higher than 80°C, which is an adhesion process temperature, were included in the adhesive layer, it was confirmed that the adhesive force was not exhibited.

As seen in Comparative Example 3, in the case where Relational Expression 1 did not satisfy the range of the present disclosure, it was confirmed that the adhesive force was not exhibited and insufficient improvement in blocking.

As seen in Comparative Example 4, in the case where Relational Expression 1 did not satisfy the range of the present disclosure, it was conformed that the adhesive force was at level B, and blocking occurred.

As set forth above, the composite separator according to an embodiment of the present disclosure has an excellent adhesive force to the electrode, and may prevent the blocking phenomenon that occurs during winding.

Further, it is possible to provide a separator having excellent heat resistance, small thermal shrinkage, and excellent battery stability.

Further, it is possible to provide a separator that has an excellent adhesive force to an electrode because a change in adhesive force is small when wound and then unwound and then used.

Further, it is possible to provide a composite separator that may not cause a phenomenon in which a coating layer is peeled due to a blocking phenomenon even when exposed to a high temperature during storage and transport of a wound separator. Specifically, it is possible to provide a composite separator having excellent anti-blocking properties, which does not cause blocking between adhesive layers, between an adhesive layer and a ceramic layer, or between an adhesive layer and a porous substrate, of a wound roll, even when stored at a high temperature of 50 to 70°C as well as at room temperature of about 25°C during transport and storage of a wound separator.

Further, it is possible to provide a composite separator that does not cause blocking when adhesive layers of the separator of the present disclosure are brought into contact with each other, pressurized at a temperature of 50°C and a pressure of 1.7 MPa for 2 hours, and then peeled at a speed of 300 mm/min and an angle of 180°.

Further, it is possible to provide a battery that has excellent alignment between electrodes and a separator within a jelly roll during cell stacking, may prevent misalignment during a process, and has a uniform thickness deviation.

Further, it is possible to provide a battery that may provide uniform lithium ion conductivity over the entire area of a separator and may maintain a capacity retention rate of 85% or more, 90% or more, or 95% or more after 300 cycles compared to an initial capacity.

The content described above is merely an example of applying the principles of the present disclosure, and other configurations may be further included without departing from the scope of the present disclosure.

Hereinabove, although the present disclosure has been described by specific matters and limited examples and comparative examples, they have been provided only for assisting in the entire understanding of the present disclosure. Therefore, the present disclosure is not limited to the examples. Various modifications and changes may be made by those skilled in the art to which the present disclosure pertains from this description.

Therefore, the scope of the present disclosure should not be limited to the described embodiments, but the claims and all modifications equal or equivalent to the claims are intended to fall within the scope of the present disclosure.

[Detailed Description of Main Elements]

10: First organic particle
20: Second organic particle
100: Composite separator
110: Porous separator
120: Adhesive layer

**Claims**

1. A composite separator for a secondary battery, the composite separator comprising an adhesive layer formed on the outermost layer of at least one surface of a porous separator,

    wherein the adhesive layer includes first organic particles and second organic particles having different average particle diameters D50 and different glass transition temperatures,
    the first organic particles have a lower glass transition temperature and a smaller average particle diameter than the second organic particles, and
    the first organic particles and the second organic particles satisfy the following Relational Expression 1:

$$[Relational\ Expression\ 1]$$

$$3 \leq T_2/T_1 \times R_2/R_1 \leq 8.5$$

    wherein $T_1$ is the glass transition temperature (°C) of the first organic particles, $T_2$ is the glass transition temperature (°C) of the second organic particles, $R_1$ is the average particle diameter D50 ($\mu$m) of the first organic particles, and $R_2$ is the average particle diameter D50 ($\mu$m) of the second organic particles.

2. The composite separator of claim 1, wherein the first organic particles have a glass transition temperature of 90°C or lower, and the second organic particles have a glass transition temperature of 95°C or higher.

3. The composite separator of claim 1 or 2, wherein the first organic particles have an average particle diameter of 100 to 1,000 nm, and the second organic particles have an average particle diameter of 500 to 2,000 nm.

4. The composite separator of any one of the preceding claims, wherein the first organic particles and the second organic particles have a glass transition temperature difference of 5°C or higher, and/or wherein the average particle diameter of the second organic particles is twice or more the average particle diameter of the first organic particles.

5. The composite separator of any one of the preceding claims, wherein a content ratio of the first organic particles: the second organic particles is a weight ratio of 50 to 99:50 to 1.

6. The composite separator of any one of the preceding claims, wherein the first organic particles and the second organic particles are acrylic-based organic particles.

7. The composite separator of any one of the preceding claims, wherein the porous separator includes a porous substrate; or a porous substrate and a porous ceramic layer being formed on one surface or both surfaces of a porous substrate and including inorganic particles.

8. The composite separator of claim 7, wherein the inorganic particles of the porous ceramic layer have an average particle diameter D50 of 50 nm to 2 $\mu$m, optionally wherein the inorganic particles of the porous ceramic layer include first inorganic particles having an average particle diameter D50 of 50 to 500 nm and second inorganic particles having an average particle diameter D50 of 500 to 2,000 nm.

9. The composite separator of claim 7 or 8, wherein the porous ceramic layer has pores formed between the inorganic particles connected by a binder.

10. The composite separator of any one of claims 7 to 9, wherein the porous substrate is a polyolefin-based porous film.

11. The composite separator of any one of the preceding claims, wherein the composite separator has one or more of the following properties:

    i) a thermal shrinkage is 3% or less in both a machine direction and a transverse direction when measured after allowing to stand at 150°C for 1 hour,
    ii) the number of adhering of the electrodes is 6 or more, on measuring adhesive force as described in the description, and/or
    iii) the occurrence of peeling of the coating layer is less than 2 % for 50 on measuring blocking test as described in the description.

12. A method for storing and/or transporting the composite separator of any one of the preceding claims,

    wherein the composite separator is used in a state of winding and the wound composite separator is stored or transported at a temperature of 50 to 70°C as well as at 25°C,
    or wherein the composite separator is used without causing blocking between the adhesive layer and the porous separator, optionally also without causing blocking between the adhesive layer and a ceramic layer.

13. A method for facilitating alignment of the battery assembly after winding, wherein the battery assembly contains the composite separator of any one of claims 1 to 11.

14. A lithium secondary battery comprising the composite separator of any one of claims 1 to 11.

15. A use of the lithium secondary battery of claim 14 in an electric vehicle, a battery charging station, solar power generation and/or wind power generation.

FIG. 1

FIG. 2

FIG. 3

FIG. 4

## REFERENCES CITED IN THE DESCRIPTION

**Patent documents cited in the description**

- JP 4414165 B